# EUROPEAN PATENT APPLICATION

(11) **EP 2 662 818 A1**
(43) Date of publication of application: **13.11.2013**
(21) Application number: 12305502.2
(22) Date of filing: 07.05.2012
(51) Int. Cl.: G06Q 20/20, G06Q 20/26, G06Q 20/32, G06Q 20/34, G06Q 20/40

(54) **Method, transaction server and account server for electronic payment in a computer network**

(71) Applicant: Alcatel Lucent, 75007 Paris (FR)
(72) Inventor: Bakker, Hajo-Erich, 71735 Eberdingen (DE); Wild, Thorsten, 70435 Stuttgart (DE); Weber, Andreas, 74251 Lehrensteinsfeld (DE)
(74) Representative: Kleinbub, Oliver

(57) **Abstract**

The invention concerns a method for electronic payment in a computer network, wherein electronic wallet devices (101, 102) are linked to accounts by an identifier, the method comprising the steps of
- receiving (203) a request for payment comprising a first amount and a first identifier of a first electronic wallet device (101),
- testing whether the account linked to the first electronic wallet device (101) by the first identifier has enough credit to pay for the first amount,
- triggering (204, 205, 206) a user prompt, in particular for requesting to lend the first amount including information about the first electronic wallet device (101), by sending (204, 206) a request including the first identifier,
- upon receipt (207) of a confirmation in response to the prompt comprising a further identifier of a further electronic wallet device (102), execute (208, 209, 210, 211) payment for the first amount using a further account linked to the further electronic wallet device (102) by the further identifier.

## Description

### Field of the invention

The invention relates to a method, a transaction server, an account server for electronic payment in a computer network.

### Background

In known systems for electronic payments electronic wallet devices also known as digital wallets are linked to an individual's bank account. Such electronic wallets function much like physicals wallets. The term electronic wallet or digital wallet is also used to describe mobile phones, especially smartphones, which store an individual's credentials and utilize wireless technologies such as near field communication to carry out financial transactions. The term electronic wallet is also used in case a radio frequency identification card is used to store the credentials. Credentials are for example an identifier of the user or the individual's bank account used to create the link between the electronic wallet and the individual's bank account. Similar information for the same purpose may be used. Instead of a bank account a dedicated electronic wallet account with virtual money, such as credits may be used.

Common to such systems is a server that interacts with the electronic wallet in order to make a payment. This server is referred to as a transaction server below. For example, in a store such transaction server is located at a checkout counter. Alternatively when using dispensing machines the transaction server may be integrated into the dispensing machine. In any case the transaction server has an interface for communication with the electronic wallet in order to exchange the credentials and to trigger payment at the checkout counter or the dispensing machine.

In such systems the electronic wallet is linked to an individual's account, for example the bank account. The accounts are typically managed by another server that is referred to as account server below. The account server usually executes the payment requested by the transaction server from the account of the individual that provided its credentials to the transaction server via the electronic wallet. To that end the electronic wallet devices communicate with the transaction server, for example, via near field communication and the transaction server communicates with the account server via wide area network connection.

The dealer operating the transaction server and requesting a payment may have an account on the account server as well. In this case the account server executes the payment by transferring the amount to be paid from the individual's account to the dealer's account. In cases where the dealer has no account on the same account server, the account server negotiates the payment with the server that manages the dealer's account.

Typically account servers are adapted to allow payment only if the individual's account contains enough credit to make the payment. Alternatively, a credit line may be available to the individual, allowing to overdraft the account. In any case there is a limit below which an individual cannot overdraft his or her account. In case a payment is requested by a transaction server that would result in an overdraft situation the account server typically denies payment and responds to the transaction server with an appropriate message. In such cases typically the transaction is terminated.

This is inconvenient for individuals and for dealers who have to cancel the checkout procedure in this case, particularly if the individual has either access to a further electronic wallet or is accompanied by a friend having his electronic wallet available and willing to use it for the due payment, i.e. lend the amount to be paid.

### Summary

The object of the invention is thus to provide a secure method to pay for a first electronic wallet using a further electronic wallet.

The main idea of the invention is a method wherein a first electronic wallet device and a second electronic wallet device are linked to respective accounts by a first and a further identifier respectively, the method comprising the steps of
- receiving a request for payment comprising a first amount and a first identifier of a first electronic wallet device,
- testing whether the account linked to the first electronic wallet device by the first identifier has enough credit to pay for the first amount,
- triggering a user prompt by sending a request including information about the received request for payment, in particular about the first amount or the first electronic wallet device or the account linked to the first electronic wallet device,
- upon receipt of a confirmation in response to the prompt comprising a further identifier of a further electronic wallet device, execute payment for the first amount using a further account linked to the further electronic wallet device by the further identifier. The advantage of this is that the further electronic wallet can be used securely to lend money to a user of the first electronic wallet in the case that the account of the first user has not enough credit to execute the payment.

The invention comprises of corresponding transaction server and account server as well as the computer program and computer program product to implement the method.

Advantageously the payment for the first amount is executed using the further account only if the further identifier received in the confirmation matches a pre-determined identifier. This way users of electronic wallet accounts can be sure that only pre-determined other electronic wallet users can lend money to them. This avoids accidental lending.

Advantageously the pre-determined identifier is selected from a pre-determined list of identifiers linked to pre-determined electronic wallet devices. This way the user of electronic wallet devices can configure whom to lend money and from whom to borrow money by adding them to the list of pre-determined electronic wallet devices.

Advantageously information about the further electronic wallet device and the first amount linked to the first identifier or the first electronic wallet device and the first amount linked to the further identifier is stored. This way information about who borrowed and/or who lent it is stored within the electronic payment system. This facilitates accounting.

Advantageously said information is sent to the first electronic wallet device or the further electronic wallet device respectively. This way, users of electronic wallet devices having user interfaces that can display information about the accounts easily are informed about changes to the accounts due to borrowing or lending of money.

Further developments of the invention can be gathered from the dependent claims and the following description.

### Brief description of the figures

In the following the invention will be explained further making reference to the attached drawings.

In the following the invention will be explained further making reference to the attached drawings.
Figure 1 schematically shows a part of an electronic payment system.
Figure 2 schematically shows a sequence diagram including some steps of a method for electronic payment.
Figure 3 schematically shows a first flowchart of some steps of a method executed in a transaction server.
Figure 4 schematically shows the second flowchart of some steps executed in an account server.
Figure 5 schematically shows a third flowchart showing some steps executed in an account server.

### Description of the embodiments

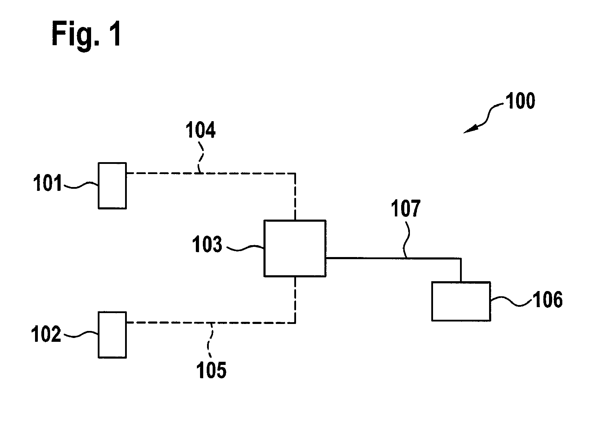

Figure 1 shows part of an electronic commerce transaction system 100. The electronic commerce transaction system 100 comprises a first electronic wallet device 101 and a further electronic wallet device 102. The electronic wallet devices 101, 102 may be smartphones with an electronic wallet application or maybe electronic wallet cards comprising radio frequency identification device chips well known as RFID chips. In any case the first electronic wallet device 101 and the further electronic wallet device 102 comprise credentials, in particular a first identifier and a further identifier linking the individual electronic wallet device to a respective account of a user of the electronic wallet device on an account server 106.

The electronic commerce transaction system 100 further comprises the account server 106 for storing account information. The account information stored comprises, for example, the first and further identifiers linking the electronic wallet devices 101, 102 to the respective user accounts, user identification and credit balance. Additionally the account server 106 is adapted to process credentials of electronic wallet devices 101, 102 received by the account server 106 in order to grant or deny access to the account.

Furthermore, the account server 106 is adapted to execute payment requests received by the account server 106. For example, the account server 106 is adapted to charge a first amount of money or credits to a first account and to give the first amount to a further account by means of subtracting credits or money from the first account and adding the credits or money to the further account.

To that end the account server 106 is adapted to receive in the request for payment identifiers of the electronic wallet devices 101, 102 linking them to the first and the further account, the payment amount and optionally a security credential like a password of the first account or the further account.

Furthermore, the electronic commerce transaction system 100 comprises a transaction server 103. The transaction server 103 and the first electronic wallet device 101 are connectable via a first data link 104 and the transaction server 103 and the further electronic wallet device 102 are connectable via a second data link 105. The first data link 104 and the second data link may be near field communication links such as radio frequency identification or Wi-Fi (IEEE802.11) links. Any other type of data links such as wide area network links may be used as appropriate depending on the capabilities of the electronic wallet devices and transaction servers used. The transaction server 103 may be connectable via an interface such as a radio frequency identification reader or a Wi-Fi antenna.

The transaction server 103 is adapted to connect to the account sever 106 via a third data link 107, for example, a wide area network connection.

The first data link 104, the second data link 105, the third data link 107 may be direct connections between the server and device. Alternatively or additionally any of the data links may comprise of one or more network nodes in-between the servers and devices.

The first electronic wallet device 101 and the further electronic wallet device 102 are adapted to connect to the transaction server 103. When using near field communication, the first electronic wallet device 101 and the further electronic wallet device 102 may be adapted to connect to the transaction server 103 only when the first electronic wallet device 101 or the further electronic wallet device 102 are within a certain distance from an interface of the transaction server 103, such as the radio frequency identification device reader. When using near field communication or wide area network connections the first electronic wallet device 101 and the further electronic wallet device 102 may be adapted to connect to the transaction server 103 only if a user input to activate the connection to the transaction server 103 is detected by the respective electronic wallet device.

The transaction server 103 is adapted to connect to any of the electronic wallets 101, 102 and the account server 106. The transaction server 103 is adapted to send requests for payment to either of the electronic wallet devices or the account server. For example, the transaction server 103 comprises a user interface or is connected to a user interface, e.g. a graphical user interface with a touch screen, adapted to trigger sending of messages for payment depending on the detection of a user input triggering the payment.

For example the transaction server 103 is connected to a user interface of a checkout counter or a dispensing machine. For example, the payment is triggered by a user by pressing a button or predetermined area on the user interface.

An exemplary sequence of messages for payment in an electronic commerce transaction system 100 is described below.

After the transaction server 103 detects that a user entered an input via the user interface connected to the transaction server to start payment the transaction server 103 initiates a payment request to an electronic wallet device 101, 102 via near field communication, for example, by activating the radio frequency identification device reader or by sending a payment request via the Wi-Fi connection.

After requesting payment from an electronic wallet device 101, 102 the transaction server 103 waits for an appropriate response from an electronic wallet device 101, 102. For example, the transaction server 103 reads out the radio frequency identification device chip via the radio frequency identification reader in order to receive the credentials stored on the radio frequency identification device chip. Alternatively the transaction server 103 waits for a reply message from the electronic wallet device 101, 102 including the credentials. The transaction server 103 typically is adapted to terminate the payment process in case no response is received within a pre-determined period of time.

In case the transaction server receives a response containing the credentials, for example, via the radio frequency identification device reader or the Wi-Fi connection, the transaction server 103 sends the request for the payment to the account server 106. The request for payment typically includes the amount to be paid and the identification of the electronic wallet device, for example, the credentials of the electronic wallet device. Furthermore, the request for payment to the account server 106 comprises the identification of the account that the payment is made to. For example, the transaction server 103 is linked to a dealer having a dealer identification that is linked to a dealer account on the account server 106. Optionally the request may comprise security credentials such as a password.

Alternatively to having the dealer account stored on the account server 106 the account that the payment is made to may be stored on any other type of server. In this case the account server 106 is adapted to negotiate payment with the other server. Such systems are known and not further described here.

Upon receipt of the payment request from a transaction server 103 the account server 106 processes the credentials of the electronic wallet device 101, 102 to identify the account to charge. Furthermore, the account server 106 processes the payment amount, for example, to translate the money amount received to the credit amount to be subtracted from the account of the electronic wallet. Furthermore the account server 106 determines whether the account linked to the electronic wallet device 101, 102 contains enough money or credit to make the payment.

In case the account server 106 determines an electronic wallet account having enough money or credit to make the payment the account server executes the payment by charging the account linked to the electronic wallet device 101, 102 and giving the amount to be paid to the dealer's account. In case the account server 106 either determines no account linked to the electronic wallet device 101, 102 matching the credentials received with the payment request or determines, that the money or credit on the account linked to the electronic wallet device 101, 102 is not sufficient to make the payment, the account server 106 typically replies by sending a deny message to the transaction server 103.

In case the payment was successful, the account server 106 typically responds to the transaction server 103 with a confirmation or grant message.

The transaction server 103 completes the transaction upon receipt of the response of the account server 106. For example, if the grant message is received from the account server 106 the transaction server displays a corresponding message via a user interface on a checkout counter or dispenses the good that was paid for via the dispensing machine output. In case a denied message is received, the transaction server triggers, for example, the display of the denied message via a graphical user interface or refuses to dispense the good.

This method does not allow lending money to a user of a first electronic wallet device 101 using a further electronic wallet device 102 directly. Instead, after terminating the first checkout procedure with an error, the whole checkout procedure has to be repeated using the further electronic wallet device 102. This is inconvenient for all participants.

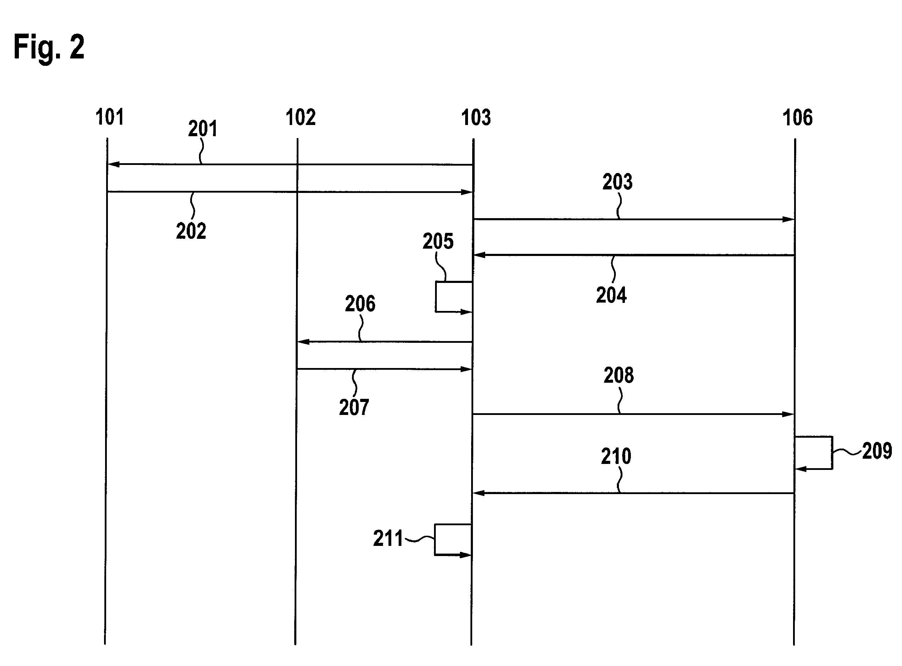

Below a method improving the checkout procedure according to a first embodiment of the invention is described making reference to the sequence diagram of Figure 2. This method starts when the transaction server 103 determines, that a user wants to make a payment.

After the start a message 201, request payment, is sent from the transaction server 103 to the first electronic wallet device 101. The message 201 is, for example, a signal via the radio frequency identification device reader to read out the credentials stored on the radio frequency identification device chip of the first electronic wallet device 101. Alternatively the message 201 may be a message sent from the transaction server 103 via the Wi-Fi connection to the first electronic wallet device 101. In this case the message may, for example, contain the amount to be paid for. The first electronic wallet device 101 in this case may display a user prompt to accept the payment, for example, including the amount to be paid.

Upon receipt of message 201, request payment, the first electronic wallet device 101 is adapted to send a message 202, response. In case the first electronic wallet device 101 comprises a radio frequency identification device chip and the message 201, request payment, was a signal from the radio frequency identification device reader the message 202, response, includes the credentials stored on the radio frequency identification device chip of the first electronic wallet device 101. In case the first electronic device 101 is a smartphone the message 202, response, may be send by the first electronic wallet device 101 via the Wi-Fi connection upon receipt of a user input granting the payment only.

Additionally, the payment amount received in the message 201, request payment, may be displayed together with a user prompt to accept the payment on a graphical user interface of the first electronic wallet device 101 in this case. In any case the message 202, response, comprises the credentials of the first electronic wallet device 101 when the payment is granted. In case that the first electronic wallet device 101 is a smartphone an alternative deny message may be sent depending on the user input detected by the first electronic wallet device 101.

Upon receipt of the message 202, response, a message 203, request payment, including the amount to be paid, the identifier of the first electronic wallet 101, and the identifier of the dealer that requests the payment is sent from the transaction server 103 to the account server 106. The first identifier of the first electronic wallet 101 may be derived from the credentials of the first electronic wallet device 101 or may be the credentials of the first electronic wallet device 101 in whole.

Upon receipt of the message 203, request payment, the account server 106 decides whether the payment can be executed or has to be denied. The decision is based on the money or credit that is available on the account linked to the first electronic wallet device 101. In case the account server 106 decides that the payment can be executed, the method continues as described above in the exemplary sequence of messages for payment.

Otherwise in case that the money or credit on the account linked to the first electronic wallet device 101 are not sufficient to make the payment, a message 204, response, is sent from the account server 106 to the transaction server 103.

The message 204, response, is, for example, a message indicating that the payment is denied. Optional the message 204, response, may include a reason for the denial. For example, a string indicating that the account was empty or that the identifier or credentials of the electronic wallet device 101 was not accepted at all may be included in the message 204, response.

Upon receipt of the message 204, response, in a step 205 the transaction server 103 triggers a user prompt for input. The user input prompt for example is displayed via a graphical user interface and includes a text message asking the user to select whether he wants to pay with a different electronic wallet device or borrow the money for the payment from someone else using a different electronic wallet device.

In case a smartphone is used as the first electronic wallet device 101, an additional message not depicted in figure 2 may be sent by the transaction server 103 to the smartphone as trigger. The smartphone used as first electronic wallet device 101 is in this case already identified by the previous payment attempt. Upon receipt of this additional message the user input prompt may be displayed on the smartphone. This way the transaction server 103 doesn't have to display the fact that the account linked to the first electronic wallet device 101 has not enough credit left. In public places this improves the privacy of the payment transaction.

In this case the user prompt displayed may prompt for the input of the identification or address of the smartphone used as second electronic wallet device 102. The user prompt may consist of a list referencing at least one predetermined second electronic wallet device 102 that can be selected by the user. In any case the smartphone used as the first electronic wallet device 101 is adapted to send an additional response message not depicted in figure 2 to the transaction server 103 in response to the received additional message upon receipt of user input. The additional response message for example is to request either to process the payment by the second electronic wallet device 102 or to not continue with the transaction. In case the second electronic wallet device 102 shall be used for payment, the additional response message comprises contact information allowing the transaction server 103 to send another payment request to the second electronic wallet device 102. For example identification or address of the second electronic wallet device 102 are included. This allows the user of the first electronic wallet device 101 to borrow the amount needed from an accompanying friend without publicly displaying any information. This increases the flexibility because the user can select from whom to borrow the money and the privacy because the input is not publicly displayed by the transaction server 103.

Upon receipt of the user input, the transaction server 103 is adapted to decide whether or not the user input indicates that the user wants to continue with a different electronic wallet device or borrow the money. In case the user indicates that he does not want to continue or borrow money the transaction ends. Otherwise, the transaction server 103 sends a message 206, request payment, as described above in message 201.

In case the second electronic wallet device 102 is a smartphone, the contact information for the second electronic wallet device 102 is determined by the transaction server 103 from the additional response message received as user input. In this case the message 206 is sent to the second electronic wallet device 102 using this contact information.

Optionally the message 206, request payment, may additionally include the identification or credentials of the user of the first electronic wallet device 101.

Upon receipt of the message 206, request payment, the further electronic wallet device 102 sends a message 207, response, including the credentials of the further electronic wallet device 102 as described in message 202 above.

At this time an optional step the transaction server 103 may be adapted to determine whether the message 207, response, was received from the first electronic wallet device 101 or from the further wallet device 102. This step may be included to avoid retry with the same first electronic wallet device 101.

In this case the transaction server 103 may be adapted to terminate the transaction in case the message 207, response, was received again from the first electronic wallet device 101.

Alternatively, the transaction server 103 may be adapted to prompt for user input again as described in step 205 above.

Upon receipt of the message 207, response, the transaction server 103 is adapted to send a message 208, request payment, to the account server 106. The message 208, request payment, includes the first identification of the first electronic wallet device 101, further identification of the further electronic wallet device 102, the amount to be paid and the dealer identification. The identifications are either derived from the credentials of the respective electronic wallet device or the credentials are sent as whole.

Upon receipt of the message 208, request payment, in a step 209 the account server 106 either executes or denies the payment from the account linked to the second electronic wallet device 102 depending on the money or credit available on the account linked to the second electronic wallet device 102. In case the money or credit on account linked to the further electronic wallet device 102 is sufficient to cover the amount to be paid, the money or credit is taken from the account linked to the further electronic wallet device 102 and given to the account of the dealer. Otherwise, the payment from the account linked to the further electronic wallet device 102 is denied.

Optionally the account server 106 is adapted to store information about who lent money to whom or who borrowed money to whom on the account server 106. To this end, for example, the identification or credentials of the first electronic wallet device 101 and the first amount to be paid is stored in association with the account linked to the further electronic wallet device 102.

Alternatively or additionally the borrowed amount and the identification or credentials of the further electronic wallet device 102 is stored in association with the account linked to the first electronic wallet device 101.

Afterwards, a message 210, response, is sent from the account server 106 to the transaction server 103 depending on the result of the payment. For example, the message 210, response, includes information acknowledging successful payment or denying payment.

Upon receipt of the message 210, response, the transaction server 103 triggers a transaction complete output 211. For example, the transaction complete output is a message denied to be displayed on a user interface connected to the transaction server 103. Alternatively, the transaction complete output may be dispensing of the good dispensing machine or a message transaction complete on the graphical user interface.

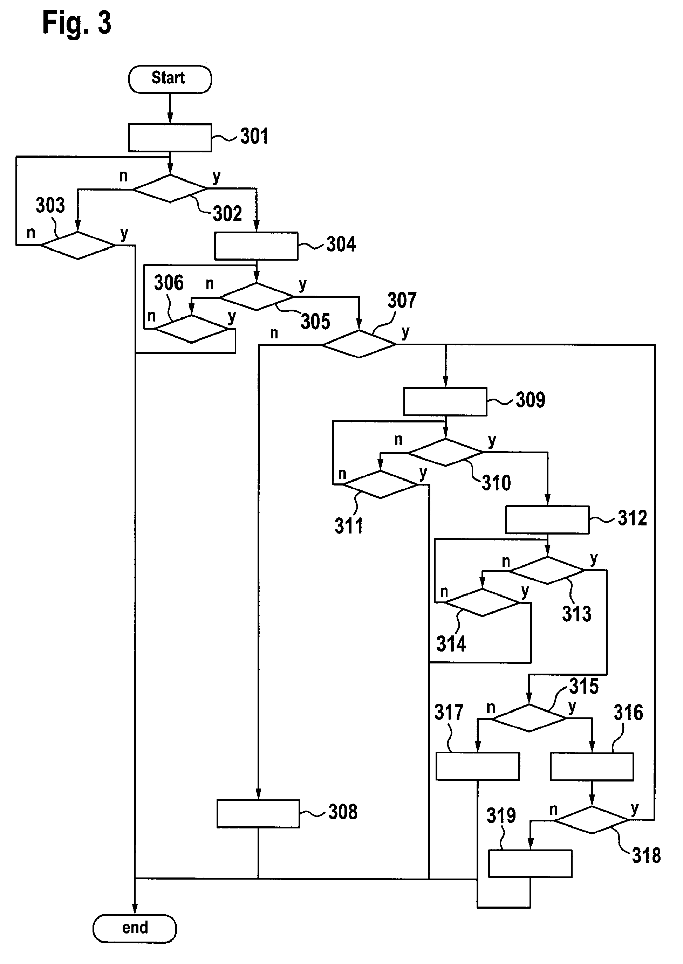

Further to the sequence diagram steps of a method for electronic payment that are executed in the transaction server 103 according to a second embodiment of the invention are described below making reference to Figure 3. The method starts, for example, when the transaction server 103 detects a trigger for payment.

After the start step 301 is executed. In step 301 a request for payment is sent. The request for payment may be either sent via the radio frequency identification device reader or the Wi-Fi or wide area network connection. Optionally the request includes the amount to be paid.

Afterwards a step 302 is executed.

In step 302 a test is performed to determine if a response to acknowledge the request for payment including the credentials or identification of an electronic wallet device is received. In case a response is received a step 304 is executed, otherwise step 303 is executed.

In step 303 no response has been received and a timeout condition is being monitored. In case the timeout condition is met, the maximum waiting time is expired and the method ends. Otherwise the message is expected and step 302 is executed.

In step 304 the identification of the electronic wallet device or the credentials are sent together with the amount to be paid and the identification of the dealer that makes the payment request are sent to the account server 106.

Afterwards a step 305 is executed. Step 305 is a test to determine if a response has been received from the account server 106. In case no response has been received a step 306 is executed, otherwise, a response has been received and step 307 is executed.

In step 306 a time-out condition is monitored and the message ends if the time-out condition is met. Otherwise waiting has not expired and the step 305 is repeated to continue waiting for the response from the account server 106.

In step 307 a response has been received from the account server 106 and a test is performed to determine if the response is to deny the transaction or not. In case the transaction is denied by the account server a step 309 is executed, otherwise a step 308 is executed.

In step 308 the transaction has been completed successfully and a trigger to complete the transaction is executed. For example, the transaction server 103 triggers the display of a payment complete message on a graphical user interface or the dispensing of the good by the dispensing machine. Afterwards the method ends.

In step 309 the transaction was denied and the transaction server 103 triggers the prompt for user input requesting the user whether or not he wants to use another electronic wallet device or borrow money from someone else. Afterwards a step 310 is executed.

In step 310 a test is performed to determine if the input of the user indicates that he wants to continue with another electronic wallet device or borrow money from someone else. In case the user wants to continue or borrow money from someone else a step 312 is executed, otherwise a step 311 is executed.

In step 311 a timeout condition is monitored. In case a timeout condition is met the method ends, otherwise a step 310 is repeated.

In step 312 the transaction server 103 sends a request for payment as described in step 301 above. Afterwards a step 313 is executed. Optionally in step 312 the request for payment includes additionally the identification of the first electronic wallet device 101 or the credentials indicating the user of the first electronic wallet device 101.

In step 313 a test is performed to determine whether a response has been received as described in step 302 above. In case a response has been received a step 315 is executed, otherwise a step 314 is executed.

In step 314 a timeout condition is monitored. In case the timeout condition is met the method ends, otherwise a step 313 is repeated.

In step 315 it is determined if a further electronic wallet device 102 is used or not. This means that another electronic wallet has been used either to continue with another electronic device by the same user or because another user accepts to lend money to the user of the first electronic wallet device 101.

For example, the credentials or identification of the electronic wallet received in response to the request of step 312 is compared to the credentials or identification received in response to the request of step 301 in order to determine whether the further electronic wallet 102 or the first electronic wallet device 101 sent the response this time. In case the first electronic wallet device 101 sends the response again a step 317 is executed, otherwise a step 316 is executed.

In step 316 a message request payment including the identification or credentials of the first electronic wallet device 101 and the further electronic wallet device 102, the payment amount and the dealer identification is sent to the account server 106. Afterwards a step 318 is executed.

In step 317 displaying of an error message indicating that the same electronic wallet was used as before is triggered by the transaction server 103. This error message may be displayed at the graphical user interface connected to the transaction server 103. Afterwards the method ends.

In step 318 a test is performed to determine whether the transaction is accepted or denied as described in step 307 above. In case the transaction is denied, a step 309 is executed in order to continue or borrow money from someone else. Otherwise step 319 is executed. In step 319 the display of a transaction complete message is triggered by the transaction server 103, for example, via the graphical user interface. Afterwards the method ends.

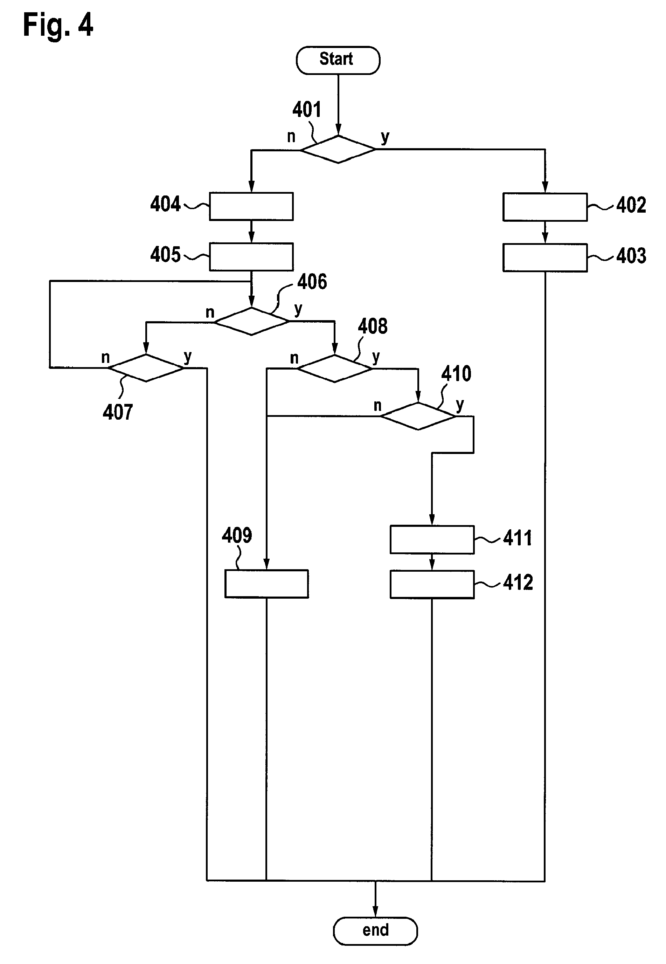

In the following method for processing requests for payment on an account server 106 is described making reference to Figure 4. The method starts, for example, when a request for payment is received including the amount to be paid, the first electronic wallet device's 101 identification or credentials and the dealer identification.

After the start a step 401 is executed. In step 401 a test is performed to determine if the account linked to the first electronic wallet device 101 has enough money or credit to cover the amount to be paid. In case the money or credit is sufficient for the payment a step 402 is executed, otherwise a step 404 is executed.

In step 402 the new amount of money or credit is stored on the account linked to the first electronic wallet device 101 and on the dealer account. In case the dealer account is not managed on the account server 106, the account server 106 may negotiate money or credit transfer to the server posting the dealer's account. Afterwards a step 403 is executed.

In step 403 a response to indicate successful payment is sent to the transaction server 103. Afterwards the method ends.

In an optional step 404 the account linked to the first electronic wallet device 101 has not enough money or credit for the payment. In this case at least one further electronic wallet identification or credential is determined from a predetermined list of electronic wallet devices associated with the account of the first electronic wallet device 101. The list of pre-determined wallet devices is, for example, stored and configured by a user of the first electronic wallet device 101 and associated to the respective electronic wallet account on the account server 106. Afterwards a step 405 is executed.

In step 405 a request to cover the payment for the first electronic wallet device 101 is sent in particular to a further electronic wallet 102. The request, for example, includes the identification of the first electronic wallet device 101 or credentials of the first electronic wallet device 101 and the amount to be paid. The request to cover the payment may be sent by the account server 106 to a transaction server 103 or, depending on the setup of the electronic payment system, directly to the further electronic wallet device 102. In the latter case the further electronic wallet device 102 is, for example, a smartphone with an electronic wallet application and a graphical user interface to display the information sent by the account server 106. In the first case the requests may be forwarded to such smartphone by the transaction server 103 or the transaction server 103 may trigger the display of the message on a graphical user interface connected to the transaction server 103. Afterwards a steps 406 is executed.

In step 406 a test is performed to determine if a response to the request has been received. In case a response has been received a step 408 is executed, otherwise a step 407 is executed.

In step 407 a test is performed to determine if the timeout condition is met. In case the timeout condition is met the method ends, otherwise a step 406 is repeated to continue waiting for the response.

In an optional step 408 a test is performed to determine if the response comprises a request for payment from the further electronic wallet 102 matching at least one of the further electronic wallet's identifications that were determined in step 404 above. In case the further electronic wallet device's 101 identification or credential received in the response matches with one of the electronic wallets determined in step 404, a step 410 is executed. Otherwise a step 409 is executed.

In the step 409 a response to deny the transaction is sent to the transaction server 103 and the method ends.

In step 410 a test is performed to determine if the account linked to the further electronic wallet 102 has enough money or credit to pay the amount to be paid. In case the money or credit is sufficient a step 411 is executed, otherwise the step 409 is executed to deny the transaction. Alternatively, to deny the transaction, a response re-triggering the request to cover the payment for the first electronic wallet may be sent according to step 405.

In step 411 the new account credit is stored for the account linked to the second electronic wallet device 102 and to the dealer's account. Additionally or optionally the information about the lent amount and the identification or credentials of the first electronic wallet device 101 is stored in association with the account linked to the second electronic wallet device 102. Additionally or optionally the information about the borrowed amount and the identification or credentials of the second electronic wallet device 102 is stored in association with the account linked to the first electronic wallet device 101. Afterwards a step 412 is executed.

In step 412 a response to indicated successful transaction is sent to the transaction server 103. Afterwards the method ends.

This way, particularly by storing the lent amount and the borrowed amounts together with the respective electronic wallet's identification, the account server 106 tracks the borrowed and lent amount to facilitate the accounting.

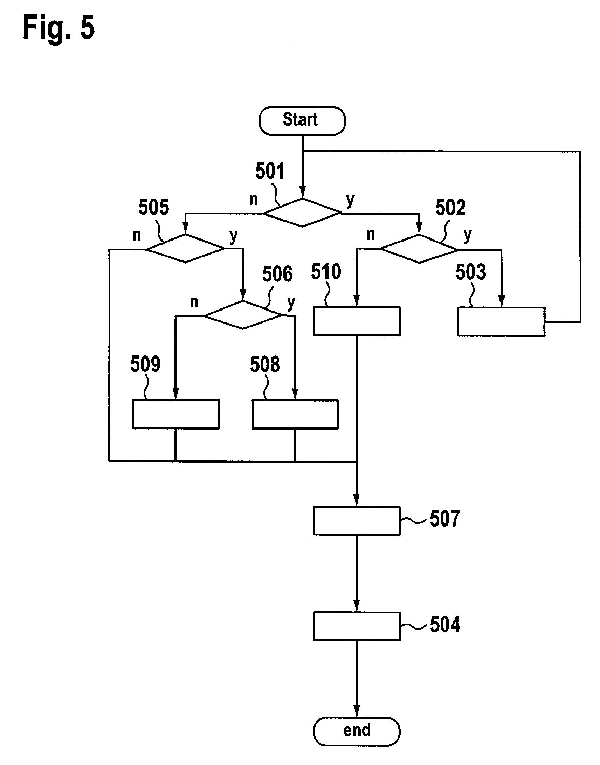

A further method executed on the account server 106 for facilitating electronic payment is described below making reference to Figure 5.

The method starts, for example, whenever a request to charge an account of an electronic wallet is received for the first electronic wallet 101.

After the start a step 501 is executed.

In step 501 a test is performed if the account linked to the first electronic wallet device 101 contains information that money or credit was borrowed from a further electronic wallet device 102. In case money was borrowed from a further electronic wallet device 102, a step 502 is executed. Otherwise a step 505 is executed.

In step 502 a test is performed to determine if the amount to be charged according to the request to charge the account linked to the first electronic wallet device 101 exceeds the borrowed amount. In case the amount to be charged exceeds the borrowed amount, a step 503 is executed. Otherwise a step 510 is executed.

In step 503 the borrowed amount is credited to the account linked to the further electronic wallet device 102 and subtracted from the amount to be stored on the account linked to the first electronic wallet device 101. The rest is stored to the account linked to the first electronic wallet device 101. Afterwards information that money was borrowed from someone is deleted. Furthermore, any information associated to the account of the further electronic wallet that money was lent to the account of the first electronic wallet is set to zero. Alternatively a marker may be set indicating that the amount lent to the first electronic wallet has just been returned. Afterwards the step 501 is repeated to determine if money was borrowed from other accounts.

In step 505 a test is performed to determine if the account contains information that money has been lent to the account linked to a further electronic wallet device 102. In case money has been lent to the account linked to a further electronic wallet device 102 a step 506 is executed, otherwise a step 507 is executed.

In step 506 a test is performed to determine if the account linked to the first electronic wallet device 101 contains information that lent amount is equal to zero or that the marker that the lent amount has just been returned is set. This indicates that someone has returned money that was borrowed to the first electronic wallet account since the last time the user of the first electronic wallet charged his account. In case the lent amount is equal to zero or the marker that borrowed money has been returned is set a step 508 is executed. Otherwise step 509 is executed.

In step 507 the new credit is stored on the account linked to the first electronic wallet device 101 and a step 504 is executed.

In step 508 when the lent amount is set to zero or the marker is set indicating that payment has been received a report is sent to the first electronic wallet device 101. The report includes information about the amount returned and the further electronic wallet device returning the amount. Afterwards the lent amount information is deleted on the account server 106. Afterwards the step 507 is executed.

In step 509 the lent amount is not equal to zero or the marker that payment has been received is not set. In this case a report on the lent amount still not returned is sent. This report includes the lent amount and the identification of the electronic wallet device owing the money. Afterwards a step 507 is executed.

In step 510 a report is sent to the first electronic wallet device 101. The report contains the borrowed amount not returned yet and the identification of the further electronic wallet device 102 that the amount was borrowed from. Afterwards step 507 is executed.

In step 504 a response sent to the first electronic wallet device 101 indicating success of the charging. The response optionally includes information about the credits on the account linked to the first electronic wallet device 101. Afterwards the method ends.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, , digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for electronic payment in a computer network, **wherein** a first electronic wallet device (101) and a second electronic wallet device (102) are linked to respective accounts by a first and a further identifier respectively, the method comprising the steps of
- receiving (203) a request for payment comprising a first amount and a first identifier of a first electronic wallet device (101),
- testing whether the account linked to the first electronic wallet device (101) by the first identifier has enough credit to pay for the first amount,
- triggering (204, 205, 206) a user prompt by sending (204, 206) a request including information about the received request for payment, in particular about the first amount or the first electronic wallet device (101) or the account linked to the first electronic wallet device (101),
- upon receipt (207) of a confirmation in response to the prompt comprising a further identifier of a further electronic wallet device (102), execute (208, 209, 210, 211) payment for the first amount using a further account linked to the further electronic wallet device (102) by the further identifier.

2. The method according to claim 1, wherein the payment for the first amount is executed using the further account only if the further identifier received in the confirmation matches a predetermined identifier.

3. The method according to claim 2, wherein the predetermined identifier is selected from a predetermined list of identifiers linked to predetermined electronic wallet devices.

4. The method according to one of the previous claims, comprising the additional step of storing information about the further electronic wallet device (102) and the first amount linked to the first identifier or the first electronic wallet device (101) and the first amount linked to the further identifier.

5. The method according to claim 4, comprising the additional step of sending said information to the first electronic wallet device (101) or the further electronic wallet device (102) respectively.

6. A server (103) for electronic payment transactions, **wherein** the server is adapted to communicate with a first electronic wallet devices (101) and a further electronic wallet device (102) that are linked to respective accounts by a first and a further identifier respectively, further adapted to
- send (203) a request for payment comprising a first amount and the first identifier of the first electronic wallet device (101), in particular to a server (106) for electronic payment accounts,
- receive (204) the result of a test whether the account linked to the first electronic wallet device (101) in particular by the first identifier has enough credit to pay for the first amount,
- trigger (205, 206) a user prompt by sending (206) a request including information about the received request for payment, in particular about the first amount or the first electronic wallet device (101) or the account linked to the first electronic wallet device (101)
- upon receipt (207) of a confirmation in response to the prompt comprising a further identifier of a further electronic wallet device (102), sending (208) a request for payment for the first amount using a further account linked to the further electronic wallet device (102) in particular by the further identifier, in particular to the server (106) for electronic payment accounts.

7. A server (106) for electronic payment accounts, wherein the server (106) is adapted to process payments by a first electronic wallet device (101) and a further electronic wallet device (102) that are linked to respective accounts in particular by a first identifier and a further identifier respectively, further adapted to
- receive (203) a request for payment comprising a first amount and the first identifier of the first electronic wallet device (101), in particular from a server (103) for electronic payment transactions,
- test whether the account linked to the first electronic wallet device (101), in particular by the first identifier, has enough credit to pay for the first amount,
- trigger (104) a user prompt by sending a request including information about the received request for payment, in particular about the first amount or the first electronic wallet device (101) or the account linked to the first electronic wallet device (101)
- upon receipt (208) of a confirmation in response to the prompt comprising a further identifier of a further electronic wallet device (102), execute (209) payment for the first amount using a further account linked to the further electronic wallet device (102) in particular by the further identifier.

8. A computer program for electronic payment in a computer network wherein a first electronic wallet device (101) and a second electronic wallet device (102) are linked to respective accounts by a first and a further identifier respectively, **wherein** said computer program, when executed on a computer, causes the computer to
- receive (203) a request for payment comprising a first amount and a first identifier of a first electronic wallet device (101),
- test whether the account linked to the first electronic wallet device (101) by the first identifier has enough credit to pay for the first amount,
- trigger (204, 205, 206) a user prompt by sending (204, 206) a request including information about the received request for payment, in particular about the first amount or the first electronic wallet device (101) or the account linked to the first electronic wallet device (101),
- upon receipt (207) of a confirmation in response to the prompt comprising a further identifier of a further electronic wallet device (102), execute (208, 209, 210, 211) payment for the first amount using a further account linked to the further electronic wallet device (102) by the further identifier.

9. A computer program product for electronic payment transactions, wherein a first electronic wallet device (101) and a second electronic wallet device (102) are linked to respective accounts by a first and a further identifier respectively, comprising a computer usable medium having a computer readable program, wherein said computer readable program, when executed on a computer, causes the computer to
- receive (203) a request for payment comprising a first amount and a first identifier of a first electronic wallet device (101),
- test whether the account linked to the first electronic wallet device (101) by the first identifier has enough credit to pay for the first amount,
- trigger (204, 205, 206) a user prompt by sending (204, 206) a request including information about the received request for payment, in particular about the first amount or the first electronic wallet device (101) or the account linked to the first electronic wallet device (101),
- upon receipt (207) of a confirmation in response to the prompt comprising a further identifier of a further electronic wallet device (102), execute (208, 209, 210, 211) payment for the first amount using a further account linked to the further electronic wallet device (102) by the further identifier.
